# EUROPEAN PATENT APPLICATION

(11) **EP 4 203 535 A1**
(43) Date of publication of application: **28.06.2023**
(21) Application number: 22214957.7
(22) Date of filing: 20.12.2022
(51) Int. Cl.: H04W 12/084, G07C 9/00

(54) **SYSTEMS AND METHODS FOR CREDENTIALS SHARING**

(30) Priority: 21.12.2021 US 202163265800 P
(71) Applicant: Carrier Corporation, Palm Beach Gardens, FL 33418 (US)
(72) Inventor: NAIR, Aswin Sukumaran, 500081 Hyderabad (IN); KUENZI, Adam, Salem, 97302 (US)
(74) Representative: Dehns

(57) **Abstract**

Systems and methods for credential sharing are disclosed. In some embodiments, a system comprises at least one processor, and memory storing instructions executable by the at least one processor, the instructions when executed cause the system to obtain, from a first user device, a request to share credentials for an access control device with a second user device; generate a host Uniform Resource Locator (URL), the URL comprising a unique token for accessing the access control device; and send the URL to the first user device, wherein the URL is configured to be shared with the second user device.

## Description

The application claims the benefit of U.S. Provisional Application No. 63/265,800 filed December 21, 2021, the contents of which are hereby incorporated in their entirety.

The invention relates generally to systems and methods for credentials sharing and, more specifically, to mobile credentials sharing.

Mobile credentials to access control devices are generally downloaded to a key holder mobile device within an application on the mobile device. The key holder may share the credentials with other mobile devices, but generally this requires the other mobile devices to download the same application on their mobile devices.

Aspects of the disclosure relate to methods, apparatuses, and/or systems for control of locking systems.

According to a first aspect of the invention, there is provided a system credential sharing comprising at least one processor, and memory storing instructions executable by the at least one processor, the instructions when executed cause the system to obtain, from a first user device, a request to share credentials for an access control device with a second user device; generate a host Uniform Resource Locator (URL), the URL comprising a unique token for accessing the access control device; and send the URL to the first user device, wherein the URL is configured to be shared with the second user device.

Optionally, the request includes one or more access parameters, wherein generating the URL comprises encoding, in the URL, the one or more access parameters.

Optionally, the URL is configured to launch a webpage on the second device, wherein selecting an icon on the webpage, associated with the access control device, provides access to the access control device.

Optionally, the webpage is configured to generate the icon responsive to the second user device being proximate to the access control device.

Optionally, the webpage is configured to generate the icon responsive to the second user device being within short-range wireless commination range with the access control device.

According to a second aspect of the invention, there is provided a method for credential sharing comprising obtaining, from a first user device, a request to share credentials for an access control device with a second user device; generating a host Uniform Resource Locator (URL), the URL comprising a unique token for accessing the access control device; and sending the URL to the first user device, wherein the URL is configured to be shared with the second user device.

According to a third aspect of the invention, there is provided a non-transitory computer-readable storage medium storing program instructions that are computer-executable to implement obtaining, from a first user device, a request to share credentials for an access control device with a second user device; generating a host Uniform Resource Locator (URL), the URL comprising a unique token for accessing the access control device; and sending the URL to the first user device, wherein the URL is configured to be shared with the second user device.

The system of the first aspect of the invention may be configured to perform the method of the second aspect of the invention, and/or may comprise the non-transitory computer-readable storage medium of the third aspect of the invention. The method of the second aspect of the invention may comprise providing and/or using the system of the first aspect of the invention and/or the non-transitory computer-readable storage medium of the third aspect of the invention. The non-transitory computer-readable storage medium of the third aspect of the invention may be configured for performing the method of the second aspect of the invention. Various other aspects, features, and advantages of the invention will be apparent through the detailed description of the invention and the drawings attached hereto. It is also to be understood that both the foregoing general description and the following detailed description are examples and not restrictive of the scope of the invention.

The subject matter, which is regarded as the disclosure, is particularly pointed out and distinctly claimed in the claims at the conclusion of the specification. The following descriptions of the drawings should not be considered limiting in any way and are provided by way of example only. With reference to the accompanying drawings, like elements are numbered alike:
FIG. 1 shows a system for credentials sharing.
FIG. 2 shows operations of a system for credentials sharing.
FIG. 3 shows a chart of a method for credentials sharing.
FIG. 4 shows a chart of a method for credentials sharing.
FIG. 5 shows a computer system that may be used to implement aspects of the techniques described herein.

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

The present disclosure provides systems and methods for sharing mobile credentials for an access device. In some embodiments, the system may be configured to receive a request for sharing credentials (e.g., a key) to an access control device (e.g., a lock, an access reader, a computer system, etc.). In some embodiments, the request may be made using a first user device (e.g., a primary key-holder device having credentials to the access control device). In some embodiments, the system may be configured to generate a special token, in the form of a URL that can then be transferred to the primary holder device. In turn, the primary holder device may share the credentials with a second user device. In some embodiments, the URL may be configured to be shared using any data sharing methods or platforms available to the first and the second user device. In some embodiments, the URL may be configured to access a web source (e.g., a webpage) that includes a link (associated with the access control device and/or the credentials to be shared) to a credential server. In some embodiments, the link may be populated in response to the copy-holder device being in proximity of the access device (e.g., in front of a door to be opened). In some embodiments, upon selecting the link, a request to open the door may be sent to the credential server. In some embodiments, after receiving the request to open the door through the URL, the credential server may be configured to conduct additional verifications before granting the request. Once granted, the credential server may be configured to communicate directly with the access device and send an open command. In the alternative, the credential server may communicate with a (e.g., hotel front desk server), which in turn sends the open-door command to the access device (e.g., a hotel room lock, access reader, etc.). The one or more operations of the present disclosure may provide a practical access control solutions that allows for a convenient way for credential sharing without requiring the copy-key holder device to have a specific application. In some embodiments, direct communication technologies may be used for communication between the user devices, and the access control devices, which may provide for a secure interaction between the parties as devices should be proximate to each other to establish a communication link. For example, in some embodiments, communications between the user device, the access control devices, may be accomplished through Bluetooth low energy (BLE/BTLE), web Bluetooth, other short-range communication protocols which may allow for low energy and cost-effective operations. That said, not all embodiments necessarily provide all of these benefits, and some embodiments may provide other distinct advantages, which is not to suggest that any other feature described herein may not also be omitted in some embodiments.

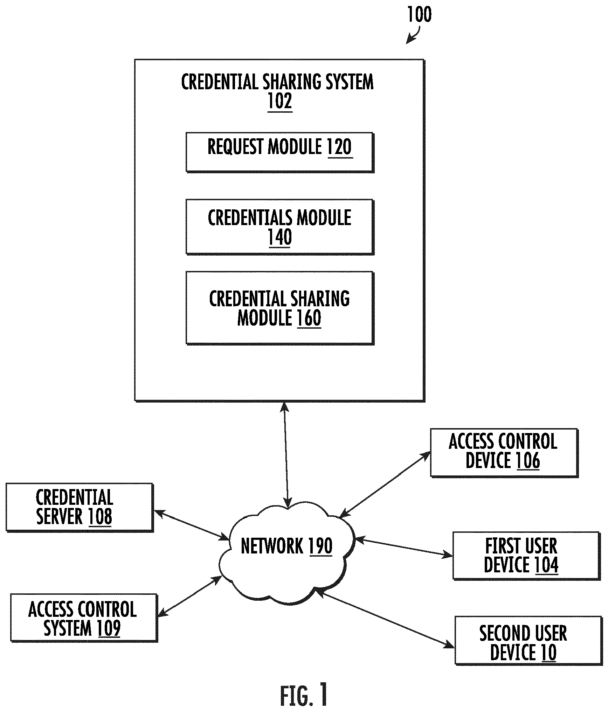

FIG. 1 shows an example of a system 100 for credential sharing, in accordance with one or more embodiments. System 100 may include credential sharing system 102, a user device 104, a user device 105, an access control device 106, a credential server 108, an access control system 109, and/or other components. Other components known to one of ordinary skill in the art may be included in system 100 to gather, process, transmit, receive, acquire, and provide information used in conjunction with the disclosed embodiments. In addition, system 100 may further include other components that perform or assist in the performance of one or more processes that are consistent with disclosed embodiments. For example, one or more embodiments described herein may be implemented in an edge device configured for providing control of data flow between networks. The edge device may be configured to perform or assist in the performance of one or more embodiments described herein (e.g., receive, process, store, or transmit information used in conjunction with the disclosed embodiments). The edge device may include other components (e.g., one or more components of system 100, or other components) to assist in the performance of the disclosed embodiments.

Access control device 106, in some embodiments, may be configured to control access to an area or an asset (e.g., a structure, a building, a room, a compartment, a vehicle, a box, a device, a machine, or other areas or assets to which access is controlled). In some embodiments, access control device 106 may include a locking mechanism, having mechanical or electrical components, that is capable of locking, fastening, and/or controlling access (e.g., to a controlled asset or controlled area). In some embodiments, access control device 106 may be configured to receive signals from and transfer signals to one or more components of system 100. In some embodiments, access control device 106 may be a wireless-capable device (e.g., wireless locks, access control readers, electronic banking controls, data transfer devices, key dispenser devices, tool dispensing devices, vehicle ignition system, vehicle door lock, compartment lock, or other device for restricting access to an asset).

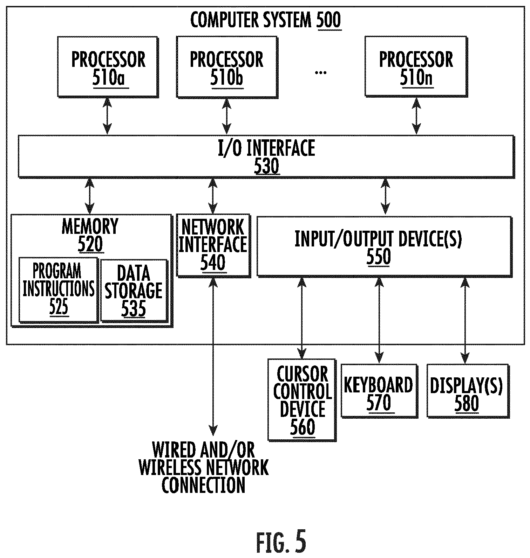

In some embodiments, access control device 106 may be configured to authenticate a user or a user device (e.g., primary holder device 104). In some embodiments, access control device 106 may include an authentication program (or application) configured to provide authentication operations (e.g., via multi-factor authentication, proximity authentication, passwords, exchange of keys, pairing, registration, biometrics, forming a private link, or other forms of authentication). In some embodiments, access control device 106 may be configured to request and/or verify digital certificate information, decrypt/encrypt information, and or other types of information processing operations. In some embodiments, access control device 106 may include computing resources such as processors and memory devices for storing instructions (e.g., computing system 500 described herein below with reference to FIG.5). The processors may be configured to execute software instructions to perform various operations consistent with one or more embodiments of the present disclosure. Although access control device 106 is depicted in FIG. 1 as a single device, in some embodiments, access control device 106 may include a plurality of interconnected devices capable of performing the functions discussed herein.

In some embodiments, access control device 106 may include one or more sensors (not shown in the figures) configured to generate output signals conveying information related to a user, user devices (e.g., devices 104 and/or 105) the controlled asset, surrounding environment of the controlled asset, and/or other sensor information. In some embodiments, sensor information may be used to detect, identify, or authenticate the user. In some embodiments, access control device 106 may include one or more of an optical sensor, an RFID reader, a biometric reader, a proximity sensor, a motion detector, an audio sensor, and/or other sensors. In some embodiments, access control device 106 may be configured to provide or all of the processing capabilities to the one or more sensors. In some embodiments, access control device 106 may be configured to communicate sensor data to training system 110, credential server 108, access control system 109, or other to other components of system 100. That said, the sensors (or additional sensors) may be positioned at any location (within or outside system 100). For example, system 100 may include one or more sensors proximate to the access control device 106, within devices 104/105, with the user (e.g., the user is in possession of the sensor through a device or the sensor is directly coupled with the user), in a surrounding area of the access control device 106 or the user (e.g., door, hallway, building, outside a building, etc.), or in other locations.

Credential server 108 may be configured for managing credentials for access control device(s)106. For example, credential server may be configured for generating credentials, authenticating users/user devices, encrypting credentials, applying restrictions (e.g., access parameters/rules). In some embodiments, credential server 108 may be configured for performing one or more operations of credential sharing system 102 (described herein below). For example, one or more components of credential sharing system 102 may be included in access control system 108. For example, in some embodiments, credential server 108 may be configured to receive a request for key sharing from a primary holder device; authenticate the request (e.g., authenticate the user and/or the primary holder device); generate the copy key; and transmit the copy key to the primary holder device. Although credential server 108 is depicted herein as a single device, it should be appreciated that credential server 108 may alternatively be embodied as a multiplicity of systems, configured to perform operations of the present disclosure, and communicate with components of system 100.

In some embodiments, access control system 109 may be configured to provide administration functions to control access device 106 (e.g., controlling, programming, monitoring, authenticating, exchanging information, etc.). In some embodiments, access control system 109 may be configured to store access control information related to the user (e.g., access credentials, identification, authentication information for the user, access events, key sharing requests, copy-key issued, etc.). In some embodiments, access control system 109 may be configured to communicate the access control information to one or more components of system 100. In some embodiments, access control system 109 may be configured to perform one or more operations of other components of system 100. For example, in some embodiments, access control system 109 may perform one or more operations of credential server 108 (described herein). In some embodiments, access control system 109 may include one or more processors, memory, databases, or other components, known to one of ordinary skill in the art, to gather, process, transmit, receive, acquire, and provide information used in conjunction with the disclosed embodiments. Although access control system 109 is depicted herein as a single device, it should be appreciated that access control system 109 may alternatively be embodied as a multiplicity of systems, configured to perform operations of the present disclosure, and communicate with components of system 100.

User device 104 (also referred to as primary key holder device 104) may be configured to communicate user authentication credentials to access control device 106 (e.g., mobile phone, a wearable computing device, a tablet, etc.). In some embodiments, user device 104 may be configured to acquire credentials to access control device 106 (e.g., from credential server 108 directly, an on-premise access control management system, from an administrator, etc.) In some embodiments, the credentials may be locally stored on user device 104. In some implementations, user device may be configured to operate an application (e.g., a mobile application) that aids a user in acquiring, using, storing and/or protecting the credentials. In some embodiments, user device 104 may be configured to communicate with one or more components of system using the application. In some embodiments, user device 104 may be configured to communicate with access control device 106 or other components of system 100 using one or more short range communications technologies (e.g., RFID, NFC, BLE, BTLE, Wi-Fi, Ultra-wideband (UWB), or other short-range communications technologies). In some embodiments, user device 104 may include one or more of sensors. For example, user device 104 may include one or more of an accelerometer, a pedometer, a location sensor, GPS, proximity, motion, and/or other sensors. In some embodiments, user device 104 may be configured to provide or all of the processing capabilities to the one or more sensors. In some embodiments, user device 104 may be configured to communicate sensor data to credential sharing system 120, access control device 106, credential server 108, access control system 109, or other to other components of system 100.

User device 105 (also referred to as copy-key holder device 105), in some embodiments, may be configured to communicate user authentication credentials to access control device 106 (e.g., mobile phone, a wearable computing device, a tablet, etc.). In some embodiments, user device may be configured to receive credentials to access control device 106. For example, the credentials received by user device 105 may be in the form of a URL configured to launch a webpage that includes an icon associated with access control device 106. In some embodiments, selecting the icon on the webpage provides access to access control device 106 (e.g., unlocks or opens the access control device). In some embodiments, user device 105 may be configured to communicate with access control device 106 or other components of system 100 using one or more short range communications technologies (e.g., RFID, NFC, BLE, BTLE, Wi-Fi, Ultra-wideband (UWB), or other short-range communications technologies). In some embodiments, the webpage may be configured to generate the icon responsive to user device 105 being within short-range wireless commination range with the access control device. For example, the web browser on user device 105 may be configured to support web Bluetooth technology. In these cases, the webpage may be configured to direct the browser to scan for nearby access control devices 106. In some embodiments, only those access control devices 106 that are in Bluetooth range are displayed. In some embodiments, user device 105 may include one or more of sensors. For example, user device 105 may include one or more of an accelerometer, a pedometer, a location sensor, GPS, proximity, motion, and/or other sensors. In some embodiments, user device 105 may be configured to provide or all of the processing capabilities to the one or more sensors. In some embodiments, user device 105 may be configured to communicate sensor data to credential sharing system 102, access control device 106, credential server 108, access control system 109, or other to other components of system 100. In some embodiments, the webpage may be configured to generate the icon (associated with access control device 106) responsive to user device 105 being proximate to the access control device. For example, GPS location of the user device 105 can be cross-verified against a geo-fence around the GPS locations of the access control devices 106. Only those access control devices 106 that are inside the geo-fence may be displayed.

Credential sharing system 102, in some embodiments, may include a request module 120, a credential module 140, a credential sharing module 160, and/or other components. In some embodiments, credential sharing system 102 may include computing resources such as processors and memory devices for storing instructions (e.g., computing system 500 described herein below with reference to FIG.5). The processors may be configured to execute software instructions to perform various operations of system 100. The computing resources may include software instructions to perform operations of modules 120, 140, 160, and/or operations of other components of system 102 or system 100. It should be appreciated that although components 120, 140, and 160 are illustrated in FIG. 1 as being co-located within a single processing unit, one or more of components 120, 140, 160, and/or other components may be located remotely from the other components. The description of the functionality provided by the different components 120, 140, 160, and/or other components described below is for illustrative purposes, and is not intended to be limiting, as any of components 120, 140, and 160 may provide more or less functionality than is described. For example, one or more of components 120, 140, or 160 may be eliminated, and some or all of its functionality may be provided by other components 120, 140, or 160. As another example, one or more additional components may perform some or all of the functionality attributed below to one of components 120, 140, or 160.

Request module 120 may be configured to receive a key share request for sharing credentials (e.g., for access control device 106). In some embodiments, the request may be received from primary key holder device 104. In some embodiments, the request may be sent using any communications means between the primary key holder device 104 and request module 120 (e.g., via a credential webpage, direct link, or other ways of communications). For example, in some embodiments, the request may be sent through an application "app" that runs on primary key holder device 104. In some embodiments, the application may be configured to send a key share request for sharing credentials to access control device 106 (e.g., sharing a key) responsive to a user's action (e.g., selecting a link/ icon on the app, or other user action on the app for requesting key sharing). In some embodiments, the application may be configured to make an application programming interface (API) call to the credential server 108 and place the request to share the key.

In some embodiments, the key share request may include one or more parameters for sharing the key. For example, the key share parameters may include a set of rules associated with the shared key. The one or more parameters (or rules) may indicate the type of access shared; the access control devices to which access is shared; the number, duration, or times of access events, and/or other key sharing rules. For example, the key share request may indicate the access control devices (or areas) the key share request is for. For example, in some embodiments, the key share request may be for all the areas primary key holder device 104 may have access to. In some embodiments, the key share request may limit the key share to a subset of the access control devices primary key holder device 104 may have access to. For example, in a hotel, the key share request may be for a room only, a room and a gym, a pool, etc.

In some embodiments, the key share request may indicate a number of access events allowed with the shared key. For example, the key share request may limit the number of access events, after which, another key share request is needed. In the example of a hotel, the number of access events (door openings) may be limited to one time only (e.g., for food delivery). In some embodiments, the key share request may indicate that the number of access events is unlimited.

In some embodiments, the key share request may indicate a duration for the key share. For example, the shared key may be configured to expire after a pre-determined amount of time (e.g., in minutes, hors, days, or any predetermined amount of time). In some embodiments, the key share request may indicate the time of day (or date) the shared key may be used. For example, the key share request may indicate that the shared key may only be used during a specific time of day (e.g., at 8:00 PM, etc.) or within a time interval (e.g., between 8:00 AM and 5:00 PM, etc.). The key share request may also indicate a date when the shared key may be used (e.g., only on January 1^{st}, etc.)

In some embodiments, the key share request may indicate the device for which the shared key is for (e.g., the copy-key holder device 105). In some embodiments, the key share request may indicate one or more authentication parameters (or rules) for authenticating the copy-key holder device 105 before key sharing. For example, the key share request may indicate an email address, a phone number (or other identifiers) of copy-key holder device 105. Credential server 108 may be configured to authenticate copy-key holder device 105 (e.g., via a one or more-time code or password sent copy-key holder device 105) before completing the key share request.

In some embodiments, the key share request may provide full access to the copy-key holder device. In other words, the parameters associated with the request may indicate that copy-key holder device 105 will have access to everything the primary key holder has access to. In the alternative, the request does not have any parameters (or rules), and all access is shared upon request. In some embodiments, request module 120 may be configured to ask (e.g., via a prompt) the primary key holder if they want to share credentials with a device 105 in responsive to detecting the device 105. For example, request module 120 may receive sensor information indicating presence of device 105 and ask the primary device 104 if they want to share credentials with device 105. For example, if device 105 is detected inside the access-controlled area (e.g., hotel room, office, building, etc.) along with primary device 104. In another example, the primary user device 104 may be prompted to share credentials if device 105 is detected in proximity of primary device 104 (e.g., more than a number of times, etc.).

Credential module 140 may be configured to authenticate the request. In some embodiments, credential module 140 may be configured to verify primary key holder device 104 permissions (e.g., type of access). For example, in response to receiving a request for credential sharing, credential module 140 may be configured to, authenticate (or re-authenticate) the primary holder (or the primary holder device 104). Any authentication method may be used and is compatible with the present disclosure (e.g., password, code, token, certificate exchange, biometric credentials, physiological characteristics, proximity, etc.) In some embodiments, credential module 140 may be configured to verify that the primary holder (or the primary holder device 104) is authorized to share credentials. In some embodiments, permission to share the credentials may be issued to the user at the same the credentials are issued. In some embodiments, if the primary holder (or the primary holder device 104) does not have permission, the user receives an error message.

In some embodiments, in response the user having permission to share the credentials, credential module 140 may be configured to further verify the request for sharing. For example, credential module 140 may verify the parameters (rules) included in the key share request. For example, time period for access, list of devices for access, number of access allowed, additional authentication required, etc. In some embodiments, if additional authentication is requested, credential module 140 may authenticate the key copy holder device 105 as explained above.

Credential sharing module 160 may be configured to create a Uniform Resource Locator (URL) associated with a copy of the credentials. In some embodiments, the copy of the credentials may be in different forms (copy of the key, a unique key based on the original key, etc.) In some embodiments, the URL may contain a unique token that maps the key sharing request and reference data. For example, the unique token may include a copy of the key and the parameters (rules) associated with the key share request (e.g., duration, time, access points, etc.) In some embodiments, the credential sharing module 160 may be configured to add additional parameters to the URL. For example, the additional URL parameters may include expiration time (e.g., after the URL have been used, or regardless of the URL having been used or not), re-sharing restrictions (whether the URL is valid if accessed from or re-shared with a third device), authentication requirements (e.g., the copy-key holder may be asked for authentication after he accesses the URL), or other URL parameters.

In some embodiments, credential sharing module 160 may be configured to share the URL with primary key holder device 104. For example, the URL may be sent to device 104 mobile application. In some embodiments, the URL may be sent to primary key holder device 104 using any data sharing means (e.g., text, mail, cloud, etc.). In some embodiments, based on the URL parameters and/or the key sharing request parameters, the primary key holder's mobile application may be configured to save the URL. In other cases, the URL may be configured not to be saved (e.g., for security reasons), instead, once received and shared the primary key holder will not have access to the URL anymore. In some embodiments, if the URL is not shared within a predetermined amount of time, the primary key holder's device (or mobile application) will not be able to access the URL.

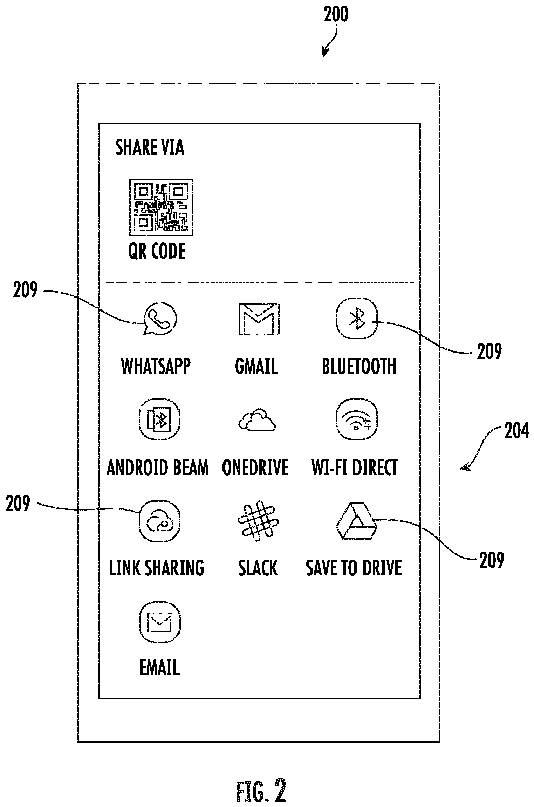

In some embodiments, the URL may be configured to be shared with other user devices. For example, the primary key holder device 104 (or the mobile application) may be configured to share the URL with the copy-key holder device 105. The URL may be shared using any data sharing supporting system between the device 104 and 105. For example, via SMS, mail, shared drive, etc.). In some embodiments, the URL may be shared using direct communication (or link) with device 105 (e.g., via Bluetooth, Wi-Fi direct, link sharing, Android beam, etc.). FIG. 2 shows an example of a primary key holder user device 204, according to one or more embodiments. FIG. 2 shows examples of data sharing systems 209 that may be used to share the URL 205 (in this case in the form of a QR code that can be scanned by the device 105). The URL may be shared using mail services (e.g.., Email, Gmail), direct communications (e.g., Bluetooth, Wi-Fi Direct, Android Beam, Link Sharing), messaging systems (e.g., WhatsApp, Slack), or shared drive (e.g., OneDrive, Drive).

In some embodiments, a webpage is launched on the copy-key holder device 105 in response to selecting (or tapping/clicking) the received URL. In some embodiments, the webpage may be configured to only list the access control devices 106 that the copy-key holder has been given access to. For example, the webpage may only show the room door, the gym door, etc. The webpage may display the access control devices in any suitable manner (e.g., icon, link, etc.). In the alternative, if the copy-key holder has the mobile application that primary key holder device 104 uses installed on their device 105, the URL can be opened in a web view inside the application itself. This can provide better usage of Bluetooth to scan for doors.

In some embodiments, the webpage may show all the access control devices 106 that the primary key holder has access to, but only the access control devices 106 for which access has been shared are actionable. For example, the copy-key holder can only click on the room to which he has access (e.g., the other access devices are grayed out or not selectable). In some embodiments, the webpage may be configured to allow the copy-key holder to request credential sharing for a second access device. For example, after selecting the second access device from the webpage, the copy-key holder may be prompted to request access to the access second device. In that case, a message may be sent to the primary key holder requesting access. If the primary key holder accepts the request, the credential module may perform the same authentication steps described above to check the primary holder access information. After authentication, the webpage may be updated and access to the second access device may be granted through the same webpage.

In some embodiments, additional checks may be performed to ensure proximity of the copy-key holder device 105 to the access control device 106. This check can limit accidental or intentionally malicious remote control. For example, in some embodiments, if the web browser on the copy-key holder's device 105 supports web Bluetooth technology, the web site directs the browser to scan for nearby access control devices 106. In some embodiments, only those access control devices 106 that are in Bluetooth range are displayed. GPS location of the copy-key holder's device 105 can be cross-verified against a geo-fence around the GPS locations of the access control devices 106. Only those access control devices 106 that are inside the geo-fence are displayed.

In some embodiments, in response to the copy-key holder selecting the access control device 106 that needs to be opened, credential module 140 may be configured to send a one-time credential (e.g., a one-time password, code, token, etc.) to the mobile number / email id configured in the key-sharing request. After receiving the one-time credential, the copy key holder (or copy-key holder device 105) submits one-time credential along with the open request. In some embodiments, credential module 140 may be configured to send the open request to access control system 109. For example, after verification that the request matches the key sharing parameters (rules), the credential server 108 may be configured to forward the open request to the access control system 109 (e.g., via an API Call). If the request does not meet the conditions set for key sharing (for instance - additional authentication is not provided), the credential server 108 may be configured to responds with an error message.

In some embodiments, after receiving the open request, access control system 109 may be configured to send the open request downstream directly to the access control device 106. For example, in cases where the access control device 106 (e.g., lock) is IoT enabled, and configured to communicate directly with the access control system 109, the access control system 109 may send the open request directly to the access control device 106 via IoT (or other channel that the lock is connected with the access control system 109). In some embodiments, the access control system 109 may be configured to send the open request to an on-premise lock management system. In some embodiments, the on-premise lock management system may be configured to identify the access control device 106 from the request, generate an open request packet, and send it to the access control device 106 that needs to be opened. In some embodiments, access control device 106 may be configured to receive the open request, perform necessary validations on the request, and open. In some embodiments, if the user is not authorized to open access control device 106, an error message may be routed back up stream via access control system 109, credential server 108, and finally to the copy-key holder's device 105.

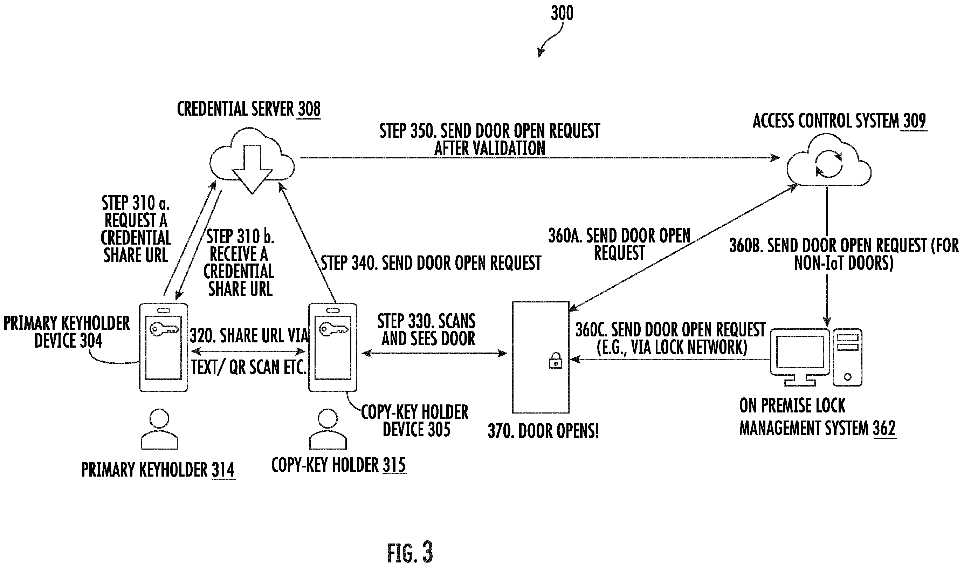

FIG. 3 is a flowchart for a method 300 for sharing credentials, according to one or more embodiments. At step 310 a, primary key holder 314 may initiate a key share request for door lock 306, by performing an action (like tapping a button) on a mobile application on primary key holder device 304 (similar to user device 104 described above). In this example, door lock 306 is an access control device similar to access control device 106 described above. The key share request is sent to credential server 308. As explained above, the key share request may include one or more parameters or rules. For example, in some embodiments, the key share request may be for all the access control devices the key holder has access to (e.g., pool, gym, etc. in addition to door lock 306). In some embodiments, the key share request may be for a subset of the access control devices that the key holder has access to (e.g., only the rooms). In some embodiments, the key share request may be configured to set the number of openings (e.g., one or more time, a limited number of times, or unlimited). In some embodiments, the key share request may be configured to include a time limit for the shared key (e.g., For the entire duration that the primary key holder has access to the devices, or for a pre-determined amount of time). In some embodiments, the key share request may be configured to set additional authentication requirements. For example, only devices that get authenticated additionally via a password sent to a mobile number or email id (provided by the primary key holder) may be allowed to use the shared key.

Responsive to receiving the request, credential server 308 may be configured to generate a URL that contains a unique token that maps to the key sharing request and associated rules. At step 310 b, credential server 308 returns the URL to the mobile application of primary key holder device 306.

At step 320, primary key holder's mobile application shares the URL with copy-key holder device 305 of copy-key holder 315 (e.g., using any applications that support data sharing).

At step 330, the copy-key holder may tap on the received URL which launches a website hosted on credential server 308. In some embodiments, the web page may list the doors (or locks) that the copy-key holder has access to. In some embodiments, the web page may only list the doors proximate to the copy-key holder. For example, using web Bluetooth technology for scanning for nearby doors (e.g., only those doors that are in Bluetooth range are displayed). In some embodiments, GPS location of the copy-key holder's mobile device 305 may be cross-verified against a geo-fence around the GPS locations of the locks. Only those doors (or locks) that are inside the Geo-Fence may be displayed on the webpage.

At step 340, a door open request may be sent to the credential server 308. In some embodiments, the request is sent in response to the copy-key holder selecting the door to be opened. In some embodiments, in response to selecting the door, credential server 308 may be configured to send a code (or password, etc.) to mobile number / email id configured in the key-sharing request. The copy-key holder may submit the received code when prompted along with the door open request.

At step 350, credential server 308 may send a door open request to front access control system 309. For example, after verification that the request matches the criteria set for door open, the credential server 308 may forward the lock open request to access control system 309 (e.g., via an API Call). If the request does not meet the conditions set for key sharing (for instance - additional authentication is not provided), the credential server 308 may respond with an error message.

After receiving the door open request, access control system 309 may be configured to send door open request downstream to an on-premise lock management system 362 or directly to door lock 306. For example, in cases where the door lock 306 is IoT enabled, and configured to communicate directly with the front desk cloud system 309, the front desk cloud system 309 may send door open request directly to the lock via IoT (or other channel that the lock is connected with the access control system) in step 360 a. In some embodiments, the access control system 309 may send door open request to the lock to the on-premise lock management system 362 at step 360 b. In turn, at step 360 c, on-premise lock management system 362 may identify the lock from the request, generate a door open request packet, and send it to the door lock 306 that needs to be opened.

In some embodiments, door lock 306 may receive the door open request, perform necessary validations on the request, and open at step 370. In some embodiments, if the user is not authorized to open door lock 306, an error message may be routed back up stream via access control system 309, credential server 308, and finally to the copy-key holder's device 305.

Returning to FIG. 1, in some embodiments system 100 may include a network 190 connecting one or more components of system 100. In some embodiments, network 190 may be a dedicated communication link. In some embodiments, network 190 may be any type of network configured to provide communications between components of system 100. For example, network 190 may be any type of wired or wireless network (including infrastructure and any type of computer networking arrangement used to exchange data) that provides communications, exchanges information, and/or facilitates the exchange of information, such as the Internet, a private data network, a virtual private network using a public network, a Wi-Fi network, a LAN or WAN network, A frequency (RF) link, BLUETOOTH^{™}, BLUETOOTH LE^{™} (BLE), Ultra-wideband (UWB), near field communication (NFC), optical code scanner, cellular network, Universal Serial Bus (USB), text messaging systems (e.g., SMS, MMS) or other suitable connections that enables the sending and receiving of information between the components of system 100.

It should be appreciated that the illustrated components are depicted as discrete functional blocks, but embodiments are not limited to systems in which the functionality described herein is organized as illustrated. The functionality provided by each of the components may be provided by software or hardware modules that are differently organized than is presently depicted, for example such software or hardware may be intermingled, conjoined, replicated, broken up, distributed (e.g., within a data center or geographically), or otherwise differently organized. The functionality described herein may be provided by one or more processors of one or more computers executing code stored on a tangible, non-transitory, machine readable medium.

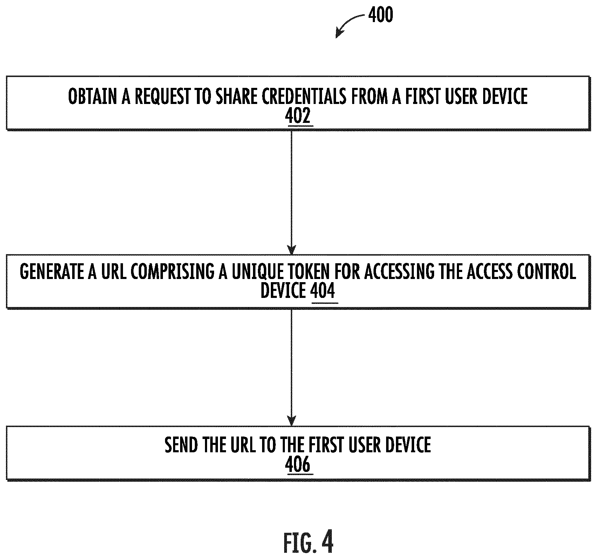

FIG.4 Illustrates a method 400 for credential sharing, in accordance with one or more embodiments of the present disclosure. The operations of method 400 presented below are intended to be illustrative. In some implementations, method 400 may be accomplished with one or more additional operations not described and/or without one or more of the operations discussed. Additionally, the order in which the operations of method 400 are illustrated in FIG. 4 and described below is not intended to be limiting.

In some embodiments, the methods may be implemented in one or more processing devices (e.g., a digital processor, an analog processor, a digital circuit designed to process information, an analog circuit designed to process information, a state machine, and/or other mechanisms for electronically processing information). The processing devices may include one or more devices executing some or all of the operations of the methods in response to instructions stored electronically on an electronic storage medium. The processing devices may include one or more devices configured through hardware, firmware, and/or software to be specifically designed for execution of one or more of the operations of the method.

At an operation 402 of method 400, a request to share credentials may be obtained from a first user device. In some embodiments, operation 402 may be performed by a module, the same as or similar to request module 120 (shown in FIG. 1 and described herein).

At an operation 404 of method 400, a URL having a unique token for accessing the access control device may be generated. In some embodiments, operation 404 may be performed by a module, the same as or similar to subject credential sharing module 160 (shown in FIG. 1 and described herein).

At an operation 406 of method 400, the URL may be transmitted to the first device. In some embodiments, the URL may be configured to be shared, by the first user device, with a second user device. In some embodiments, operation 406 may be performed by a module, the same as or similar to credential sharing module 160 (shown in FIG. 1 and described herein).

Embodiments of one or more techniques of for credential sharing as described herein may be executed on one or more computer systems, which may interact with various other devices. One such computer system is illustrated by FIG. 5. FIG. 5 shows an example of a computer system that may be used to implement aspects of the techniques described herein. In different embodiments, computer system 500 may include any combination of hardware or software that can perform the indicated functions, including, but not limited to, a computer, personal computer system, desktop computer, laptop, notebook, tablet, or netbook computer, mainframe computer system, handheld computer, a wearable computing device, workstation, network computer, a camera, a set top box, a mobile device, network device, internet appliance, PDA, wireless phones, pagers, a consumer device, video game console, handheld video game device, application server, storage device, a peripheral device such as a switch, modem, router, or other type of computing or electronic device.

In the illustrated embodiment, computer system 500 includes one or more processors 510 coupled to a system memory 520 via an input/output (I/O) interface 530. Computer system 500 further includes a network interface 540 coupled to I/O interface 530, and one or more input/output devices 550, such as cursor control device 560, keyboard 570, and display(s) 580. In some embodiments, it is contemplated that embodiments may be implemented using a single instance of computer system 500, while in other embodiments multiple such systems, or multiple nodes making up computer system 500, may be configured to host different portions or instances of embodiments. For example, in one embodiment some elements may be implemented via one or more nodes of computer system 500 that are distinct from those nodes implementing other elements.

In various embodiments, computer system 500 may be a uniprocessor system including one processor 510, or a multiprocessor system including several processors 510 (e.g., two, four, eight, or another suitable number). Processors 510 may be any suitable processor capable of executing instructions. may be comprised of semiconductor(s) and/or transistors (e.g., electronic integrated circuits (ICs)). In such a context, processor-executable instructions may be electronically executable instructions. For example, in various embodiments, processors 510 may be general-purpose or embedded processors implementing any of a variety of instruction set architectures (ISAs), such as the x86, PowerPC, SPARC, or MIPS ISAs, or any other suitable ISA. In multiprocessor systems, each of processors 510 may commonly, but not necessarily, implement the same ISA.

In some embodiments, at least one processor 510 may be a graphics processing unit. A graphics processing unit or GPU may be considered a dedicated graphics-rendering device for a personal computer, workstation, game console or other computing or electronic device. Modern GPUs may be very efficient at manipulating and displaying computer graphics, and their highly parallel structure may make them more effective than typical CPUs for a range of complex graphical algorithms. For example, a graphics processor may implement a number of graphics primitive operations in a way that makes executing them much faster than drawing directly to the screen with a host central processing unit (CPU). In various embodiments, the image processing methods disclosed herein may, at least in part, be implemented by program instructions configured for execution on one of, or parallel execution on two or more of, such GPUs. The GPU(s) may implement one or more application programmer interfaces (APIs) that permit programmers to invoke the functionality of the GPU(s). Suitable GPUs may be commercially available from vendors such as NVIDIA Corporation, ATI Technologies (AMD), and others. In some embodiments, one or more computers may include multiple processors operating in parallel. A processor may be a central processing unit (CPU) or a special-purpose computing device, such as graphical processing unit (GPU), an integrated circuit or on-chip system, an application-specific integrated circuit (ASIC), a field-programmable gate array (FPGA), a complex programmable logic device (CPLD), or application-specific integrated circuits.

System memory 520 may be configured to store program instructions and/or data accessible by processor 510. In various embodiments, system memory 520 may be implemented using any suitable memory technology, such as static random-access memory (SRAM), synchronous dynamic RAM (SDRAM), nonvolatile/Flash-type memory, or any other type of memory. In the illustrated embodiment, program instructions and data implementing desired functions, such as those described in this disclosure, are shown stored within system memory 520 as program instructions 525 and data storage 535, respectively. In other embodiments, program instructions and/or data may be received, sent, or stored upon different types of computer-accessible media or on similar media separate from system memory 520 or computer system 500. Generally speaking, a computer-accessible medium may include storage media or memory media such as magnetic or optical media, e.g., disk or CD/DVD-ROM coupled to computer system 500 via I/O interface 530. Program instructions and data stored via a computer-accessible medium may be transmitted by transmission media or signals such as electrical, electromagnetic, or digital signals, which may be conveyed via a communication medium such as a network and/or a wireless link, such as may be implemented via network interface 540.

In one embodiment, I/O interface 530 may be configured to coordinate I/O traffic between processor 510, system memory 520, and any peripheral devices in the device, including network interface 540 or other peripheral interfaces, such as input/output devices 550. In some embodiments, I/O interface 530 may perform any necessary protocol, timing or other data transformations to convert data signals from one component (e.g., system memory 520) into a format suitable for use by another component (e.g., processor 510). In some embodiments, I/O interface 530 may include support for devices attached through various types of peripheral buses, such as a variant of the Peripheral Component Interconnect (PCI) bus standard or the Universal Serial Bus (USB) standard, for example. In some embodiments, the function of I/O interface 530 may be split into two or more separate components, such as a north bridge and a south bridge, for example. In addition, in some embodiments some or all of the functionality of I/O interface 530, such as an interface to system memory 520, may be incorporated directly into processor 510.

Network interface 540 may be configured to allow data to be exchanged between computer system 500 and other devices attached to a network, such as other computer systems, or between nodes of computer system 500. In various embodiments, network interface 540 may support communication via wired or wireless general data networks, such as any suitable type of Ethernet network, for example, via telecommunications/telephony networks such as analog voice networks or digital fiber communications networks; via storage area networks such as Fibre Channel SANs, or via any other suitable type of network and/or protocol.

Input/output devices 550 may, in some embodiments, include one or more display terminals, cursor control devices (e.g., mouse), keyboards, keypads, touchpads, touchscreens, scanning devices, voice or optical recognition devices, or any other devices suitable for entering or retrieving data by one or more computer system 500. Multiple input/output devices 550 may be present in computer system 500 or may be distributed on various nodes of computer system 500. In some embodiments, similar input/output devices may be separate from computer system 500 and may interact with one or more nodes of computer system 500 through a wired or wireless connection, such as over network interface 540.

Those skilled in the art will appreciate that computer system 500 is merely illustrative and is not intended to limit the scope of the present disclosure. In particular, computer system 500 may also be connected to other devices that are not illustrated, or instead may operate as a stand-alone system. In addition, the functionality provided by the illustrated components may in some embodiments be combined in fewer components or distributed in additional components. Similarly, in some embodiments, the functionality of some of the illustrated components may not be provided and/or other additional functionality may be available.

It should be understood that the description and the drawings are not intended to limit the invention to the particular form disclosed, but to the contrary, the intention is to cover all modifications, equivalents, and alternatives falling within the spirit and scope of the present invention as defined by the appended claims. Further modifications and alternative embodiments of various aspects of the invention will be apparent to those skilled in the art in view of this description. Accordingly, this description and the drawings are to be construed as illustrative only and are for the purpose of teaching those skilled in the art the general manner of carrying out the invention. It is to be understood that the forms of the invention shown and described herein are to be taken as examples of embodiments. Elements and materials may be substituted for those illustrated and described herein, parts and processes may be reversed or omitted, and certain features of the invention may be utilized independently, all as would be apparent to one skilled in the art after having the benefit of this description of the invention. Changes may be made in the elements described herein without departing from the spirit and scope of the invention as described in the following claims. Headings used herein are for organizational purposes only and are not meant to be used to limit the scope of the description.

As used throughout this application, the word "may" is used in a permissive sense (i.e., meaning having the potential to), rather than the mandatory sense (i.e., meaning must). The words "include", "including", and "includes" and the like mean including, but not limited to. As used herein, the statement that two or more parts or components are "coupled" shall mean that the parts are joined or operate together either directly or indirectly, i.e., through one or more intermediate parts or components, so long as a link occurs. As used herein, "directly coupled" means that two elements are directly in contact with each other. As used herein, "fixedly coupled" or "fixed" means that two components are coupled so as to move as one while maintaining a constant orientation relative to each other. As used throughout this application, the singular forms "a," "an," and "the" include plural referents unless the content explicitly indicates otherwise. Thus, for example, reference to "an element" or "a element" includes a combination of two or more elements, notwithstanding use of other terms and phrases for one or more elements, such as "one or more." The term "or" is, unless indicated otherwise, non-exclusive, i.e., encompassing both "and" and "or." Terms describing conditional relationships, e.g., "in response to X, Y," "upon X, Y,", "if X, Y," "when X, Y," and the like, encompass causal relationships in which the antecedent is a necessary causal condition, the antecedent is a sufficient causal condition, or the antecedent is a contributory causal condition of the consequent, e.g., "state X occurs upon condition Y obtaining" is generic to "X occurs solely upon Y" and "X occurs upon Y and Z." Such conditional relationships are not limited to consequences that instantly follow the antecedent obtaining, as some consequences may be delayed, and in conditional statements, antecedents are connected to their consequents, e.g., the antecedent is relevant to the likelihood of the consequent occurring. Further, unless otherwise indicated, statements that one value or action is "based on" another condition or value encompass both instances in which the condition or value is the sole factor and instances in which the condition or value is one factor among a plurality of factors. Unless otherwise indicated, statements that "each" instance of some collection have some property should not be read to exclude cases where some otherwise identical or similar members of a larger collection do not have the property, i.e., each does not necessarily mean each and every. Unless specifically stated otherwise, as apparent from the discussion, it is appreciated that throughout this specification discussions utilizing terms such as "processing," "computing," "calculating," "determining" or the like refer to actions or processes of a specific apparatus, such as a special purpose computer or a similar special purpose electronic processing/computing device.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. For example, it is to be understood that the present disclosure contemplates that, to the extent possible, one or more features of any embodiment can be combined with one or more features of any other embodiment. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for credential sharing, the system comprising:
at least one processor; and
memory storing instructions executable by the at least one processor, the instructions when executed cause the system to:
obtain, from a first user device, a request to share credentials for an access control device with a second user device;
generate a host Uniform Resource Locator (URL), the URL comprising a unique token for accessing the access control device; and
send the URL to the first user device, wherein the URL is configured to be shared with the second user device.

2. The system of claim 1, wherein the request includes one or more access parameters, and wherein generating the URL comprises encoding, in the URL, the one or more access parameters.

3. The system of claim 1 or 2, wherein the URL is configured to launch a webpage on the second device, and wherein selecting an icon on the webpage associated with the access control device, provides access to the access control device.

4. The system of claim 3, wherein the webpage is configured to generate the icon responsive to the second user device being proximate to the access control device.

5. The system of claim 3 or 4, wherein the webpage is configured to generate the icon responsive to the second user device being within short-range wireless communication range with the access control device.

6. A method for credential sharing, the method comprising:
obtaining, from a first user device, a request to share credentials for an access control device with a second user device;
generating a host Uniform Resource Locator (URL), the URL comprising a unique token for accessing the access control device; and
sending the URL to the first user device, wherein the URL is configured to be shared with the second user device.

7. The method of claim 6, wherein the request includes one or more access parameters, and wherein generating the URL comprises encoding, in the URL, the one or more access parameters.

8. The method of claim 6 or 7, wherein the URL is configured to launch a webpage on the second device, and wherein selecting an icon on the webpage, associated with the access control device, provides access to the access control device.

9. The method of claim 8, wherein the webpage is configured to generate the icon responsive to the second user device being proximate to the access control device.

10. The method of claim 8 or 9, wherein the webpage is configured to generate the icon responsive to the second user device being within short-range wireless commination range with the access control device.

11. A non-transitory computer-readable storage medium storing program instructions, wherein the program instructions are computer-executable to implement:
obtaining, from a first user device, a request to share credentials for an access control device with a second user device;
generating a host Uniform Resource Locator (URL), the URL comprising a unique token for accessing the access control device; and
sending the URL to the first user device, wherein the URL is configured to be shared with the second user device.

12. The non-transitory computer-readable storage medium of claim 11, wherein the request includes one or more access parameters, and wherein generating the URL comprises encoding, in the URL, the one or more access parameters.

13. The non-transitory computer-readable storage medium of claim 11 or 12, wherein the URL is configured to launch a webpage on the second device, and wherein selecting an icon on the webpage, associated with the access control device, provides access to the access control device.

14. The non-transitory computer-readable storage medium of claim 13, wherein the webpage is configured to generate the icon responsive to the second user device being proximate to the access control device.

15. The non-transitory computer-readable storage medium of claim 13 or 14, wherein the webpage is configured to generate the icon responsive to the second user device being within short-range wireless commination range with the access control device.
